# EUROPEAN PATENT SPECIFICATION

(11) **EP 0 937 590 B1**
(45) Date of publication and mention of the grant of the patent: **02.05.2003**
(21) Application number: 98830079.4
(22) Date of filing: 19.02.1998
(51) Int. Cl.: B60C 29/00

(54) **Device for inflating and deflating a tyre inner tube**
Vorrichtung zum füllen und abblasen von Schlauchen von Reifen
Dispositif de gonflage et de dégonflage d'une chambre à air pour pneumatiques

(43) Date of publication of application: 25.08.1999
(73) Proprietor: PIRELLI PNEUMATICI Società per Azioni, 20126 Milano (IT)
(72) Inventor: Caretta, Renato, Gallarate (VA) (IT); Volpi, Alessandro, Milano (IT); Cantu, Marco, Carnate (Milano) (IT)
(74) Representative: Giannesi, Pier Giovanni

(56) References cited:
- EP-A- 0 263 251
- DE-A- 2 301 878
- US-A- 2 301 096
- US-A- 2 905 221
- US-A- 4 216 809
- US-A- 4 280 546
- US-A- 5 109 905

## Description

The present invention relates to a valve for inflating inner tubes for tyres, to an inner tube provided with said valve and to a wheel for vehicles comprising a tyre mounted on a corresponding rim and provided with said inner tube; more particularly, the invention relates to an inner tube formed by one or more separate compartments and provided with an inflation valve which does not have any fixed systems for connection to the outside of the tyre and the rim.

The wheel is the element forming a link between vehicle and road; it performs the functions of providing the vehicle and its load with a pneumatic-type support system and ensuring, by means of the tyre, a suitable behaviour on the road.

Supporting of the vehicle is provided by the volume of pressurized air contained inside the wheel; for this purpose, the first and the most common of the solutions adopted consists in the use of an inner tube inserted between tyre and rim and inflated with pressurized air introduced into the tube by means of an inflation valve projecting outside the wheel.

More precisely, the wheel comprises a tyre defining a toroidal cavity which is mounted on a corresponding rim and has a bottom surface provided with a central channel and two bead seats on which the beads of the tyre rest in abutment and which are each axially delimited between an end radial surface (projecting shoulder) in an axially external position and an axially internal, annular, raised counter-surface.

The inner tube, inserted between tyre and rim, comprises a torus-shaped expandable tubular body which is generally made of elastomeric material and which can be inflated by means of an associated inflation valve.

The valve usually comprises a base for connection to the inner tube and a cylindrical casing (stem) which is fixed to the base and inside which the mechanism for activating the inflating and deflating operations is arranged.

The stem of the valve is usually housed in a suitable hole which is provided on the bottom surface of the rim, more precisely on the channel wall, and from which it emerges into the external environment, at atmospheric pressure, with the corresponding end closed by a cap.

The aforementioned valve allows at least three fundamental operations to be carried out in order to provide the tyre with the correct operating pressure, i.e. inflation and rapid deflation and adjustment to the desired pressure value.

US-A-2,905,221 shows the features of the preamble of claims 1 or 10 and relates to valves of the type employed to provide controlled flow of the inflationary medium between two or more compartments of safety tubes or tyres. These valves are responsive to fluid pressure differential between inner and outer containers and are designed to close in the event of a sudden loss of inflationary air from the outer container.

The traditional inner tubes, precisely on account of the fact that they comprise a stem passing through the rim, may pose problems - which are currently still unsolved- in some operating conditions of the tyre.

In fact, in conditions of rapid acceleration of the vehicle, it has been noted that the tyre may slip with respect to the rim with a consequent high risk of tearing of the tube at the bottom of the valve or shearing of the valve stem, which results in immediate deflation of the tyre and corresponding loss of stability of the vehicle, with serious risks as regards the safety of the driver and the passengers of the vehicle itself.

The problem is further accentuated in the case of high-performance tyres, but cannot be excluded in other applications, in particular in view of the fact that the present-day vehicles, even though they have a limited power, and hence are incapable of very high speeds, nevertheless allow high driving torques to be transmitted to the ground, so as to give rise to the aforementioned risks.

Essentially the problem of having an inner tube which is safe even in the case of slipping between the tyre and rim is still unsolved.

Moreover, it must be pointed out that the mounting of a traditional inner tube between tyre and rim involves a few problems since the inner tube must be inserted by passing it through the limited space defined between the side of the tyre and rim and then, by means of successive attempts at performing a manual operation which is not particularly easy, introducing the stem of the valve through the appropriate hole on the rim so that it emerges with its end portion into the environment outside the wheel, at atmospheric pressure.

In particular, the aforementioned problem arises more frequently in so-called "low profile" tyres, where the ratio between the cross-sectional height, measured between the base of the beads and the top of the tread, and the maximum width of the tyre, is equal to or less than 0.7.

The Applicant has realized that there is the possibility of solving the problems according to the tyre for vehicle wheels defined in claims 1 to 10 and the method for inflating an inner tube inserted in the toroidal cavity defined by a tyre for vehicles according to claims 11 to 16.

The present invention will be understood more clearly, however, with the aid of the following description and the accompanying drawings which are intended purely by way of a non-limiting example and in which:
- Figure 1 is a partial axial cross-section of a tyre mounted on the respective rim and associated with the inner tube according to the invention;
- Figure 2 illustrates a different type of inner tube according to the invention;
- Figure 3 illustrates a set of three valves for the inner tube according to Figure 1;
- Figure 4 illustrates a set of two valves for the inner tube according to Figure 1;
- Figure 5 illustrates a preferred embodiment for the valve set according to Figure 1;
- Figure 6 illustrates a first constructional detail of the valve set in the embodiment according to Figure 5, along the plane VI-VI of said figure;
- Figure 7 illustrates another constructional detail of the valve set in the embodiment according to Figure 5, along the plane VII-VII of said figure;
- Figure 8 shows a preferred embodiment of a tyre according to the invention.

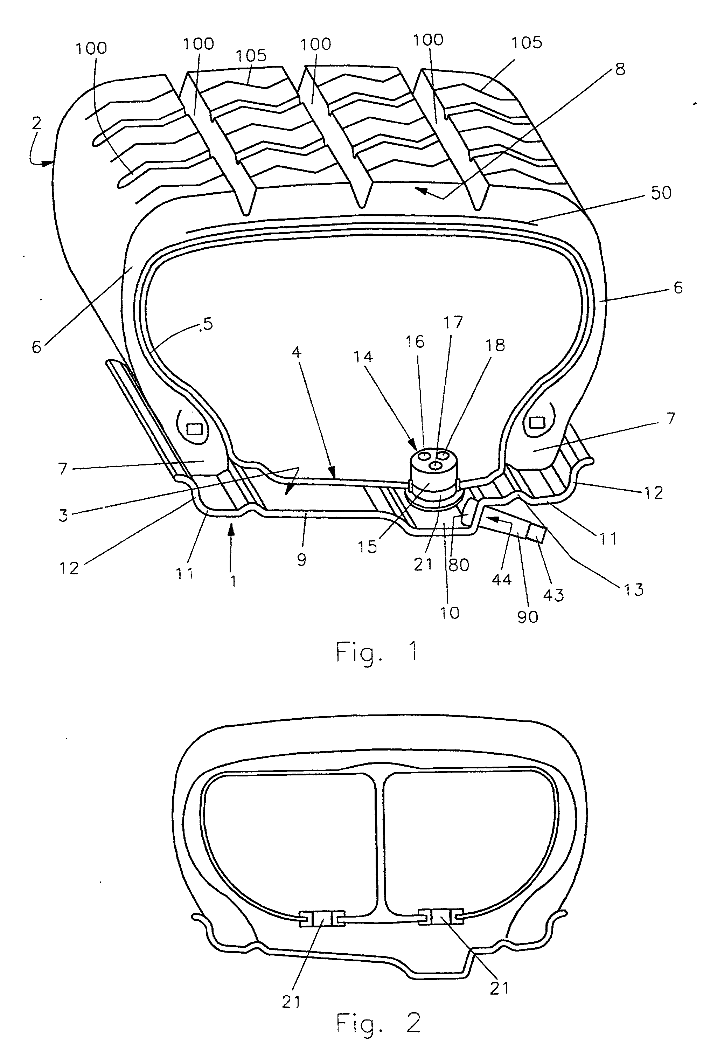

Figure 1 shows, denoted by 1, a partial cross-sectional view of a wheel for vehicles, comprising a tyre 2, a rim 3 and an inner tube 4 inserted inside the cavity delimited between tyre and rim.

The tyre 2, in the example shown, is of the conventional type and in any case of limited importance for the purposes of the invention; it comprises a toroidal carcass 5, sidewalls 6 terminating in a pair of beads 7, a tread 8 provided on its radially external surface with a suitable tread pattern including grooves 100 and cuts 105 and, if necessary, a belt structure 50 arranged, at the top of the tyre, between carcass and tread and usually comprising a plurality of belt strips arranged radially on top of one another and reinforced with textile or metal cords which are arranged parallel to one another in each strip and intersecting with respect to the adjacent strips and preferably arranged parallel to the equatorial plane in the radially outermost strip.

The rim 3 comprises a bottom surface 9 provided with a central channel 10 and two bead seats 11 which are lateral with respect to the channel and on which the beads of the tyre rest in abutment; each seat is delimited axially between an end radial surface (projecting shoulder) 12 in an axially external position and an axially internal, annular, raised surface 13.

The wall of the channel 10 advantageously has, formed in it, a hole 44 inside which an ordinary inflation valve 90 for tubeless tyres is mounted.

The tyre illustrated in Figure 1 is of the "low profile" type, i.e. with a cross-sectional ratio H/C (between height H and width C of its cross-section) not greater than 0.7. The inner tube 4 is preferably moulded and vulcanized in a toroidal shape so as to "memorize" this shape; in other words, when it is subjected to mechanical stresses which deform it, it is able to produce elastic reactions which allow it to regain its original, non-deformed, shape. In particular, and more preferably, the inner tube is moulded and vulcanized with a toroidal shape having an internal volume not less than one third of the final operating volume.

In this connection it is particularly advantageous to use a tube (Figure 2) which is divided up into two circumferential compartments A and B separated by a central wall 110 which has a greater rigidity than the sidewalls 115, such as that described in the European Patent Application No. 97EP-830600.9 filed by the same Applicant.

In any case, for the purposes of the invention, the inner tube may be formed in any other convenient manner and may be of any type, both single-volume and with more than two compartments, however arranged.

For the purposes of inflation and deflation of the compartments into which the inner tube is divided, preferably each compartment will be provided with its own device according to the invention.

The device 14 for inflating and deflating the inner tube has a rigid body 15, preferably made of plastic, comprising a set of valves each of which is delimited by a casing having, arranged inside it, the associated activation mechanism, i.e. the part of the valve operating between an open position and a closed position, respectively for admitting or for interrupting the flow of pressurized air through the casing.

In particular, this set of valves comprises three valves, respectively an inflation valve 16, a adjustment valve 17 and a deflation valve 18.

The rigid body 15, which has a preferably cylindrical configuration, is mounted inside a suitable bush 21 (Fig. 2) defining a circular passing through opening formed in the elastomeric material of the radially internal surface (underside) of the inner tube.

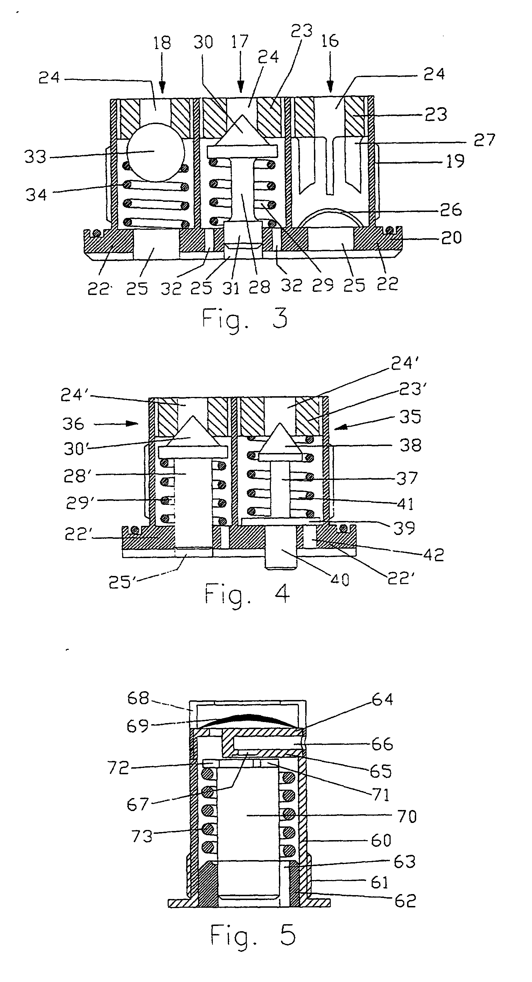

Preferably the aforementioned rigid body (Fig. 3) has an annular portion 19 of its external surface which is threaded so as to allow it to be screwed into the bush 21, and a bottom flange 20 which allows its position to be fixed with respect to the bush.

As can be clearly seen from Figures 1, 2 and 8, the aforementioned rigid body 15 and the valve set contained therein is completely isolated from the surrounding environment and therefore does not have any elements for connection to the environment outside the wheel, passing through the wall of the rim. Moreover, the inner tube provided with this device is free to move in any position inside the cavity delimited by the tyre and by the wall of the rim.

For the sake of better comprehension and ease of description, Figure 3 illustrates the three aforementioned valves, arranged in side by side relationship in the same plane, even though in the cylindrical body they are more advantageously arranged around the same axis of symmetry of the cylindrical body.

The three valves illustrated in Figure 3 comprise different activation mechanisms dependent on the fact that each of them performs a single function.

Each valve has its own container casing which is substantially cylindrical in shape and delimited by two bases, respectively a first one and a second one, the first base 22 coinciding with the flange associated with the underside surface of the inner tube and the second base 23 on the axially opposite side to the flange, on the end of the casing inside the inner tube.

The bases of each cylindrical casing have central holes 24, 25.

The inflation valve 16 is of the non-return type and comprises an obturator displaceable from the "valve open" position to the "valve closed" position and vice versa, the displacement between the two positions being determined by the difference in pressure existing between the axially opposite surfaces of the obturator.

In the preferred embodiment of Figure 3, the mechanism of the inflation valve comprises a lens-shaped obturator 26 which is convex towards the inside of the casing.

The obturator 26, in the "valve closed" position, rests on the first base 22 closing the hole 25 and is displaceable into the "valve open" position in a position at a distance from the first base.

The open position at a distance from the base 22 is determined by the presence of stopping elements formed by a discrete number of lamellar elements 27 projecting in cantilever from the second base 23 towards the first base 22, being circumferentially arranged at intervals from one another and axially extending over a section with a length less than the distance between said first and second bases and having their ends axially directed towards the first base profiled with a concave contour. The ends of the elements 27 form together a concave bearing surface matching the convex surface of the obturator 26.

In the open position of the valve, the flow of pressurized air coming from the hole 25 raises the lens-shaped element 26 from the base 22, passes through the free spaces between the elements 27 and from here flows through the hole 24 into the inner tube.

In the closed position the air pressure existing inside the tube presses the lens 26 against the first base 22 closing the hole 25.

Preferably, this activation mechanism of the valve is manufactured so as to have little sensitivity to forces other than those generated by the difference in pressure between the two ends of the valve, in particular to centrifugal forces which are able to act on the valve mechanism during operation of the tyre, as a result of the high speeds of the vehicle, resulting in the transition from the "valve closed" position to the "valve open" position with the risk of possible deflation of the tyre.

In a preferred embodiment, the mechanism for closing the valve, i.e. the lens-shaped element 26, is made with light materials so that its limited mass, even when combined with the effect of the square of the speed, is not able to develop a force sufficient to raise it from the closed position against the air pressure acting on its convex surface.

Even more preferably, as an alternative to or in combination with the use of light materials, the construction of an obturator which has little sensitivity to the centrifugal forces involves, for this element, a ratio between the surface area of the element in square millimetres and its mass in grammes which is greater than 40 mm²/g and, even more preferably, greater than 80 mm²/g.

The mechanism of the adjustment valve 17 comprises a needle 28 and a spring 29 housed inside a cylindrical container substantially identical to that of the valve 16.

More precisely, the needle 28 has on its ends respectively a conical head 30 inserted in the hole 24 of the second base 23 and a cylindrical tail-piece 31 sliding inside the hole 25 of the first base 22.

The spring 29, compressed between the axially internal annular surface of the conical head 30 and the axially internal annular surface of the first base 22, pushes the conical head 30 against the hole 24, communicating with the inner tube, keeping the valve in the closed position.

When the air pressure inside the tube exceeds by a predetermined value the external counter-pressure, the aforementioned pressure overcomes the force of the spring 29, adjusted on the basis of this predetermined value, causing the movement of the conical head 30 away from the hole 24 and the consequent flowing out of air through the gap present between the cylindrical tail-piece and the hole 25, or as an alternative to or in combination with the gap, through openings 32 formed on the first base 22.

The mechanism keeps the associated valve open until the air pressure inside the tube has dropped to a value insufficient to overcome the reaction of the spring which therefore brings the needle 28 into the closed position.

The mechanism for activating the deflation valve 18 comprises a ball 33 and a spring 34 housed inside a cylindrical container substantially identical to that of the valve 16.

The spring 34, compressed between the surface of the ball 33 and the axially internal annular surface of the first base 22, pushes the ball 33 against the hole 24, communicating with the inner tube, keeping the valve in the closed position: the thrust exerted by the spring on the ball is in fact advantageously adjusted to a value which is decidedly higher than that of the operating pressure of the tube.

By causing displacement of the ball towards the base 22, overcoming the resistance of the spring 34, the pressurized air is allowed to flow out from the inner tube through the hole 24 into the cylindrical container and from here, through the hole 25, into the cavity defined between tyre and rim, placed in communication beforehand with the external environment.

In order to cause the aforementioned displacement, according to a preferred embodiment of the invention, the obturator element, in the specific case the ball 33, is made sensitive to the effects of a field of forces generated outside the rim, preferably a magnetic field generated by a magnet arranged outside the rim.

In this embodiment, therefore, the spherical obturator will have preferably at least a portion thereof consisting of soft ferromagnetic material.

The external magnetic field, generated in any known manner, is associated with the wheel in a position such as to cause attraction of the ball 33 towards the base 22, opening the valve.

It has already been mentioned that the device 14 associated with the rigid body 15, as an alternative to that illustrated in Figure 3, may also use other embodiments of the valves and may concentrate two or more of the functions to be performed in one of the three valves mentioned.

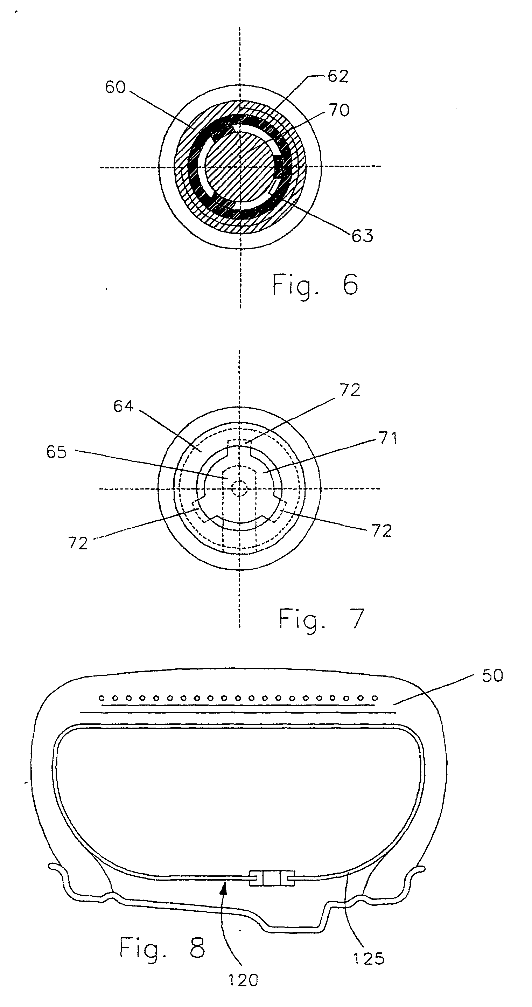

Solely by way of example, Figure 4 illustrates an inflation valve 35 of the "normally open" type which may be closed by means of interference with a counter-element located alongside a valve 36 intended to perform the dual function of adjustment and deflation.

In the same figure the parts of the valves 35 and 36 similar to those of the valves of Figure 3 are indicated by the same reference numbers with an apex.

In a preferred embodiment thereof, the mechanism for activation of the inflation valve 35 comprises a cylindrical stem 37 having one end provided with a conical head 38 directed towards the hole 24', and a flange 39 fixed onto the stem 37 perpendicularly with respect to the longitudinal direction thereof, at a certain distance from the end of its end portion 40, sliding in a hole of the first base 22' from which it projects axially outwards.

A spring 41 with a diameter greater than the diameter of the conical head 38, compressed between the flange 39 and the axially internal surface of the second base 23', keeps the flange 39 resting on the base 22' and, together therewith, the conical head 38 extracted from the hole 24'.

One or more holes 42 passing through the base 22' and suitable passing through openings formed on the flange 39 place in communication the inside of the valve 35 with the space delimited between rim and tyre. The inflation valve 35 is shown in the open condition.

Closing of the valve is determined by entry of the conical head 38 into the hole 24', caused by displacement of the end portion 40 towards the base 23' when the external surface of the device 14, as will be seen, comes into contact with the surface of the rim.

In a preferred embodiment of the adjustment valve 36, the obturator of the valve comprises a cylindrical stem 28', sliding in the hole 25' of the first base 22' and having one end provided with a conical head 30' which has a base diameter greater than the diameter of the stem and is inserted in the hole 24'.

A spring 29', compressed between the axially internal annular surface of the conical head 30' and the axially internal annular surface of the first base 22', pushes the conical head 30' against the hole 24', communicating with the inner tube, keeping the valve in the closed position.

In the aforementioned preferred embodiment the cylindrical stem 28' is made with a material sensitive to a magnetic field, thus giving rise to an activation mechanism useful both for a adjustment valve and for a deflation valve. In particular, this obturator replaces the ball 33 of the valve 18, while, as regards operation of the valve 36, respectively for the adjustment or discharging function, the same comments already made still apply. In this case, in view of the cylindrical shape of the magnetic actuator it is advantageous to use, in place of the soft ferromagnetic material suitable for spherical actuators, a hard ferromagnetic material magnetized so as to form a permanent magnet: particularly suitable are sintered materials consisting of a samarium/cobalt or iron/neodymium/boron alloy.

In the most preferred embodiment of the invention, a single valve performs all three functions envisaged. This valve (Figure 5) preferably comprises a cylindrical casing 60 which is flanged on the end projecting outside the inner tube and provided with an external threading 61 or other equivalent fastening system (rapid coupling, etc.) in the vicinity of said flanged end for mounting inside the bush 21 already described.

A ring 62 is mounted inside said flanged end, by means of screwing or in another convenient manner, said ring being provided with at least two, but preferably three or more shoulders 63 projecting radially inwards.

The axially opposite end of the cylindrical casing 60 is closed by a circular rim 64 integral with a duct 65 which is soldered onto the axially internal surface of said rim, has two openings, respectively 66 on the side surface of the cylindrical casing and 67 on the side surface of the duct, and is directed towards the flanged end of the casing and preferably coaxial therewith.

A cup-shaped cage 68 is screwed, or else locked, in a coaxial position, onto the circular rim 64, and a lens-shaped element 69, with its concavity directed towards the cylindrical casing is movable inside the cup and rests on the circular rim.

A coaxial stem 70 is arranged inside the cylindrical body 60, said stem being axially slidable and in particular guided between the shoulders 63 of the ring 62: the axial surface of the stem directed towards the circular rim is integral with a disc 71, which preferably has a diameter greater than that of the stem 70 and even more preferably is provided with lugs 72 radially projecting in cantilever fashion from the periphery of the disc. The aforementioned stem 70 is preferably a permanent magnet which is made of a sintered alloy chosen preferably from among the types mentioned above, or in any case comprises ferromagnetic material.

Finally, a compressed spring 73 surrounds the stem 70, resting against the ring 62 at one end and against the projecting edge of the disc 71 and/or against the lugs 72, at the other end.

As already mentioned for the similar valves described above, the thrust value of the spring is calibrated on the basis of the value of the working pressure of the tyre and hence the inner tube.

In the light of the above description, the operating mode of the valve may be easily understood.

During the inflating stage, pressurized air acting outside the tube flows inside the cylindrical body, passing between the side surface of the stem 70 and the ring 62, and from here, passing by the disc 71 and through the circular rim 64, displaces the lenticular element 69 from its rest position on the rim and enters into the tube, passing through the cage 68 which has the exclusive function of containing the lenticular element in a predetermined space.

As soon as the pressure acting inside the tube exceeds the value of the external pressure, the lenticular element is pressed against the circular rim, closing the central hole thereof, so as to prevent air passing from inside to outside the tube.

If the value of said internal pressure exceeds the adjustment value of the spring, the pressurized air which is present inside the duct, communicating with the tube through the hole 66, compresses the spring, displacing the disc 71 and the associated stem 70 away from the duct, thus allowing the air to flow out through the hole 67 towards the flanged end of the cylindrical body and from here into the external environment.

As soon as the internal pressure, decreasing in value, has become less than the adjustment value of the spring, the latter will extend, bringing back immediately the disc 71 against the duct 65 so as to close the hole 67.

Should one then wish to perform rapid deflation of the tube it is sufficient to apply a magnetic field which acts on the stem 70, drawing it towards the flanged end of the cylindrical body, so as to displace the disc 71 and open the hole 67, as already described.

The magnetic field will keep the pin in the open position of the hole for the whole period required by the operator.

At this point of the description the person skilled in the art is able to design and produce other types of valves which do not have elements for connection to the external environment, in accordance with the invention, and which are designed to perform at least the three functions described here.

For example, the simple magnetic actuator of the deflation valve could be replaced with an active device, for example comprising a miniaturized solenoid valve, and a radio wave or ultrasound receiver designed to activate the solenoid valve upon receiving a suitable coded signal.

The solenoid valve could be of the electromagnetic type or could comprise phase-changing actuators, fuse-type diaphragms, elements made of shape-memorizing material, electric micromotors, piezoelectric actuators and other similar devices.

In an alternative embodiment, the wheel of the invention comprises a new type of tyre which can be fitted to a conventional rim, so as to form said wheel.

Preferably, in the tyre according to the invention, the inner tube forms an integral part, i.e. a single body with the tyre: this may be preferably achieved by introducing an unprocessed, or at least partially prevulcanized, inner tube into the unprocessed carcass of the tyre to be vulcanized. During the moulding and vulcanization process, the tube, inflated with pressurized fluid in accordance with the usual vulcanization processes not described here since they are known to the person skilled in the art and not particularly important for the purposes of the present invention, adheres intimately to the surface of the tyre except in its circumferential underside portion 120 (Figure 8) axially extending between the beads.

By way of conclusion, the tyre according to the invention is characterized by the presence of a circumferential baffle 125 which connects together the beads and separates the toroidal cavity delimited by the carcass of the tyre from the external environment.

This baffle need not necessarily form part of an inner tube inserted in the tyre, but may be made as an independent semi-finished product, for example a sheet of elastomeric material, formed separately, for example by means of calendering, and assembled with the tyre during a stage in the manufacture thereof.

The device according to the invention described above is advantageously mounted in the wall of said baffle.

Alternatively, the tyre provided with said baffle may also comprise one or more independent cavities, each provided with its own device according to the invention.

The tyre wheel according to Figure 1, independently of whether it has a tyre and an inner tube separate from one another or a tyre provided with the separator baffle described above, comprises means for introducing and extracting pressurized air respectively into and from the toroidal cavity defined between tyre and rim.

In all the embodiments, these means do not have an extension of any kind which is connected to the tube or to the baffle and which is designed to fix the circumferential position of the tube or the tyre with respect to the rim.

In the preferred embodiment of the wheel according to the invention, said means for introducing and extracting air comprise the usual valve for inflation of tubeless tyres essentially consisting of a tubular element 43 having one end incorporated in a rubber stopper 80 inserted in an air-tight manner inside a corresponding hole 44 in the wall of the rim and provided on the opposite end with a suitable closing cap, not shown.

The procedure for mounting and inflating the tyre 2 on the rim 3 initially involves the step of fitting a first bead 7 onto the rim until it is in the vicinity of the associated bead seat.

Then, the inner tube is introduced into the not yet closed space, delimited between tyre and rim, then the second bead is fitted onto the rim into the associated bead seat.

The cap of the tubular element 43 is now removed and, using any instrument, for example a common compressed-air supply gun with a pressure gauge, pressurized air is introduced inside the space between tyre and rim.

The pressure value of the air which is introduced is chosen sufficiently high so as to be able to push almost instantaneously the two beads 7 of the tyre onto their bead seats, against the corresponding projecting shoulders 12 of the rim, thus producing in this way the sealed closure of the internal cavity between the tyre and rim. As soon as the desired pressure value has been reached, easily ascertainable with any known device (pressure gauge), introduction of the pressurized air is stopped.

Preferably the air pressure value is chosen so as to be between 150% and 200% of the working pressure; in the example of the description, the pressure of the air introduced is 4.5 bar for a tyre intended to have an air pressure of 2.5 bar in working conditions.

The high-pressure air deforms initially the inner tube, compressing it substantially onto itself; however the tube, having been advantageously moulded with a torus shape, memorizes this shape and reacts to deformation by developing internal tensions which result in it reassuming its toroidal configuration.

In these conditions, a negative pressure is produced inside the tube, with respect to the external pressure of the cavity, resulting in an air flow directed towards the inside of the inner tube through the inflation valve of the device according to the invention.

As the internal volume of the tube is filled with pressurized air, the tube expands, returning gradually to its moulded shape; finally, after a certain amount of time, the pressure equilibrium between the inside of the tube and the external cavity between tyre and rim is reached. During this stage, both the adjustment valve and the deflation valve remain closed.

The air supply tool is now removed from the tubular element 43 so that all the pressurized air contained in the cavity is discharged through it, resulting in this cavity assuming the value of atmospheric pressure.

The difference in pressure between the two compartments completes expansion of the inner tube 4, also in a practically instantaneous manner, so as to arrange it with the underside surface pressed in abutment against the bottom surface of the rim and, in the case of the valve 35, causes the sealed closure of the inflation valve owing to the effect of the thrust exerted by the wall of the rim on the base 40 of the stem 37.

In fact, owing to this difference in pressure, the underside surface of the inner tube is pressed against the bottom surface of the rim, forcing the end portion 40 of the stem 37 to enter into the hole 25, overcoming the opposite thrust of the spring 41, thus forcing the conical head 38 to enter into the hole 24, closing off communication between the inside and the outside of the inner tube.

In the case of the valve 16 or the valve 60, closing is performed as a result of the positive difference in pressure applied to the two opposite ends of the obturator element.

Since the pressure reached inside the inner tube is greater than the predetermined working pressure, the adjustment valve opens since this pressure produces, on the obturator element, a thrust having a value greater than that exerted by the adjustment spring.

The valve is closed when the difference between the pressure inside and the pressure outside the tube, equivalent to atmospheric pressure since the cap of the valve 43 has been removed, corresponds to the working pressure on the basis of which adjustment of the opposition spring has been performed.

The behaviour of a tyre provided with a separator baffle according to the invention will be functionally entirely identical to that with the inner tube, except for the different manner and different degree of deformation of the baffle.

Once the operation involving inflation of the tube and adjustment of the pressure to the predetermined value has been completed, the closing cap is applied onto the tubular element 43, isolating the cavity of the wheel from the external environment.

The value of the pressure existing inside the inner tube may be determined at any moment using, for example, the already mentioned supply tool of the known type.

The procedure involves injecting a small quantity of pressurized air into the cavity of the wheel; the value indicated by the pressure gauge, which corresponds with a reasonable degree of accuracy to the pressure existing inside the tube, is then read off.

Alternatively, a less experienced operator may advantageously use, in order to verify the value of the inflation pressure, a suitable instrument which is able to meter exactly the quantity of air introduced into the aforementioned cavity, outside the tube.

Let us assume, for example, that 100 cm³ of air at a pressure of 5 bar has been injected and the resultant pressure measured. Let us assume also that the internal volume of the expanded tube is equivalent to 30 litres; the measurement error arising from introduction of the aforementioned quantity of air is equivalent to 0.0143 bar, corresponding to 0.6%, and may be ignored since it is less than the adjustment error of pressure gauges normally used for checking the pressure of tyres.

If the pressure inside the tube must be increased, for example in order to restore the value of the working pressure, the inflation procedure described above must be repeated from the beginning.

Rapid deflation of the inner tube, as already seen, may be performed by causing displacement of the obturator of the corresponding valve from its closed position.

This displacement may be performed in many ways, from which the person skilled in the art will not have difficulty in choosing the one most suited to his specific requirements; these ways include the possibility of opening up apertures formed on the wall of the rim and mechanically gripping with a suitable tool the abovementioned closing obturator which is accessible from outside the device in all of the embodiments thereof illustrated above: the Applicant, however, prefers to make use of a permanent magnet or an electromagnet brought into the vicinity of the deflation valve provided with an obturator sensitive to the magnetic field.

The magnetic field resulting from the magnet, attracting the aforementioned obturator towards the base of the rim, overcomes the force of the opposition spring so as to cause opening of the valve and consequently flowing out of the pressurized air, present inside the inner tube, to the outside through the tubular element 43 from which the cap has been removed beforehand.

The inflation and deflation device according to the invention has numerous advantages compared to the valves associated with an inner tube according to the state of the art.

In fact the main characteristic feature of this device is that it comprises, in any embodiment, valves which do not have elements providing a connection between the internal volume of the inner tube and the environment outside the wheel.

Therefore, in travel conditions where slipping of the tyre occurs with respect to the rim, causing rotation also of the tube around the rim, the inflation valve always remains intact and perfectly functional without undergoing any damage, differently from that which occurred in traditional inner tubes with tearing of the tube wall and even shearing of the valve stem passing through the rim wall.

Moreover, normal working of the inner tube is advantageously ensured owing to the fact that the device also performs, with valves separate from one another or with means concentrated in the same valve, the additional functions of adjustment and deflation; in particular the adjustment function is no longer performed manually by an operator, but is performed by an automatic device which ensures precisely predetermined values of the working pressure which are always the same for each tube inflation operation, while accidental deflation due to damage of the part of conventional valves which projects from the rim, for example as a result of impacts with obstacles in the road or other problems, such as loss of the closing cap, is eliminated.

In fact, from examining Figure 1 the inner tube and the set of valves associated therewith remain independent and intact even in the case where the tubular element 43 inserted in the rim is damaged during travel for any reason.

In fact, even if this element were extracted completely from the hole 44 on the rim, it would not alter and in any case could not influence the activation mechanism of the valves, whatever the function of the latter.

Moreover the inflation device according to the invention, which does not have parts associated with the inner tube and projecting from the rim, allows the inner tube to be arranged rapidly and without twisting inside the cavity between tyre and rim.

This is because the present embodiment of the inflation valve, which is characterized by the abovementioned characteristic feature, eliminates the need to carry out complex and difficult operations which are required with conventional valves according to the state of the art in order to insert the valve stem of the inner tube, from inside the cavity between tyre and rim towards the outside through the appropriate hole provided on the rim.

Advantageously, the greater ease of inserting the inner tube into the aforementioned cavity not only results in a substantial saving in time and greater appeal of the product to maintenance and repair personnel, but may also give rise to preferential use of an inner tube with several compartments in tyres manufactured as the tubeless version.

The inner tube with at least two independent compartments forms in fact a safety device designed to give the tyre stability even when partially deflated following perforation of one compartment.

It must be pointed out that the inflation device according to the invention, which has valves without elements projecting outside the rim, overcomes the drawbacks listed above both when the inner tube consists of a single compartment and when it has several independent compartments manufactured in any manner.

Preferably, in this case each compartment will be provided with its own device as described and illustrated above.

Advantageously, owing to the characteristic features of the invention, rapid and easy extraction of the inner tube from the wheel is also obtained when it is required to perform replacement of the tyre or the tube or its inflation device, which is mounted in the tube wall in a manner easily separable from the latter.

The preferred arrangement of the valves in a single rigid body 15 or 60 allows moreover immediate extraction thereof from the housing bushes 21 (Fig. 2) and immediate overhaul or replacement thereof.

## Claims

1. Tyre for vehicle wheels, delimiting a toroidal cavity defined between a top portion and a pair of axially facing sidewalls (6) terminating in beads (7) for assembly of the tyre (2) with a corresponding mounting rim, said toroidal cavity being able to be isolated from the surrounding environment at atmospheric pressure, following the abovementioned assembly, and comprising an inner tube (4) in said cavity, elastically expandable for the introduction of pressurized fluid into its internal volume, being integral with the surface of said cavity and provided with an inflation and deflation device (14) inserted in the circumferential portion of the wall of said inner tube (4) axially extending between said beads (7), said device (14) not having elements for connecting the internal volume of the inner tube (4) and said surrounding environment at atmospheric pressure, **characterized in that** said device (14) comprises at least one first inlet valve (16), for inflating said inner tube (4) with pressurized fluid and one second adjusting valve(17), for maintaining the pressure existing in said inner tube (4) within a predetermined range of values.

2. Tyre according to Claim 1, **characterized in that** said device (14) comprises at least one third discharge valve (18), for rapid deflation of said inner tube (4).

3. Tyre according to Claim 1, **characterized in that** said device (14) comprises a rigid body (15) incorporating an inflation valve (16), a adjustment valve (17) and a discharge valve (18).

4. Tyre according to Claim 1, **characterized in that** said inlet valve (16) is a valve of the non-return type comprising an activation mechanism actuated by the difference in pressure existing between the ends of said valve (16).

5. Tyre according to Claim 4, **characterized in that** said activation mechanism comprises an obturator element (26) which is displaceable from an open position to a closed position of said valve (16), as a result of the difference in pressure existing between the inside and the outside of said inner tube (4).

6. Tyre according to Claim 1, **characterized in that** said inlet valve (16) is a valve of the normally open type comprising an activation mechanism displaceable from the open position to the closed position of said valve (16) as a result of interference with an opposition element.

7. Tyre according to Claim 1, **characterized in that** said adjustment valve (17) is a valve of the normally closed type comprising an activation mechanism which is displaceable from the closed position to the open position of said valve (17) as a result of the thrust exerted by the pressurized fluid inside said inner tube (4) against a resilient opposition element exerting an opposite thrust having a predetermined value.

8. Tyre according to Claim 2, **characterized in that** said discharge valve (18) is a valve of the normally closed type comprising an activation mechanism displaceable from the closed position to the open position of said valve (18) as a result of the thrust exerted by an action arising from said surrounding environment against a resilient opposition element exerting an opposite thrust having a value greater than that of the pressure of the fluid inside said inner tube (4).

9. Tyre according to Claim 1, **characterized in that** said inner tube (4) comprises at least two compartments (A,B) independent from one another and each provided with said device (14).

10. Tyre for vehicle wheels, delimiting a toroidal cavity defined between a top portion and a pair of axially facing sidewalls (6) terminating in beads (7) for assembly of the tyre (2) with a corresponding mounting rim, said toroidal cavity being able to be isolated from the surrounding environment at atmospheric pressure, following the abovementioned assembly, said tyre comprising an elastically expandable circumferential baffle (125) soldered to said sidewalls (6) and axially extending between the same so as to delimit a closed space formed in said cavity between the baffle (125) and the top portion of said tyre (2), said baffle (125) comprising an inflation and deflation device (14) not having elements for connecting said closed space and said surrounding environment at atmospheric pressure, **characterised in that** said device (14) comprises at least one first inlet valve (16), for inflating said baffle (125) with pressurized fluid and one second adjusting valve (17), for maintaining the pressure existing in said baffle (125) within a predetermined range of values.

11. Method for inflating an inner tube (4) inserted in the toroidal cavity defined by a tyre (2) for vehicle wheels, mounted on the corresponding rim, said cavity being isolated from the surrounding environment at atmospheric pressure, said inner tube (4) being provided with an inflation and deflation device (14) which does not have any elements for connection to said surrounding environment, passing through said rim, comprising the following steps:
a) introducing pressurized air into said toroidal cavity until a predetermined pressure value is reached such as to cause contraction of the volume of the tube (4) and a consequent elastic reaction of the materials which form said tube (4), deformed by said contraction in volume;
b) waiting for the pressure inside the inner tube (4), as a result of said elastic reaction of the tube (4), to return to equilibrium with the pressure of the air outside said tube (4), in the space defined between tyre (2) and rim;
c) discharging the pressurized air remaining in said cavity between tyre (2) and rim;

12. Method according to Claim 11, comprising the additional steps of:
d) waiting for the inner tube (4) to have discharged the excess fluid until it reaches a predetermined inflation pressure value;
e) isolating said cavity between tyre (2) and rim from the surrounding environment at atmospheric pressure.

13. Method according to Claim 11, in which said step of introducing pressurized air into said cavity is performed with a valve (16) of the non-return type mounted on said inflation device (14) and comprises the step of causing closing of said valve (16) as a result of the difference in pressure between inside and outside of the inner tube (4).

14. Method according to Claim 11, in which said step of introducing pressurized air into said cavity is performed with a valve of the normally open type mounted on said inflation device (14) and comprises the step of causing closing of said valve by means of interference between the device (14) and the wall of the rim.

15. Method according to Claim 12, in which said step of discharging the excess fluid until said predetermined inflation pressure value is reached is performed with an adjustment valve (17) of the normally closed type mounted on said inflation device (14).

16. Method for deflating an inner tube (4) inflated with pressurized fluid and inserted in the toroidal cavity defined by a tyre (2) for vehicle tyres, mounted on the corresponding rim, said inner tube (4) being provided with an inflation and deflation device (14) not having any elements for connection with the environment outside said cavity, passing through said rim, in which said deflation step is performed by extracting said fluid from said tube (4) by means of a discharge valve (18) of the normally closed type, mounted on said inflation device (14), displacing an activation mechanism from the closed position to the open position of said valve (18) as a result of an action arising from said environment outside said cavity.

## Patentansprüche

1. Reifen für Fahrzeugräder,
- wobei der Reifen einen toroidförmigen Hohlraum begrenzt, der zwischen einem oberen Abschnitt und einem Paar von axial zugewandten Seitenwänden (6) gebildet wird, die in Wulsten (7) für die Montage des Reifens (2) auf einer entsprechenden Montagefelge enden,
- wobei der toroidförmige Hohlraum von seiner Umgebung bei Atmosphärendruck auf die erwähnte Montage folgend trennbar ist, und
- wobei der Reifen einen inneren Schlauch (4) in dem Hohlraum aufweist,
-- der elastisch für das Einführen von Druckluft in sein Innenvolumen expandierbar ist,
-- der ein Stück mit der Oberfläche des Hohlraums bildet und
-- der mit einer Füll- und Entleervorrichtung (14) versehen ist,
--- die in den Umfangsabschnitten der Wand des inneren Schlauchs (4) eingeführt ist, der sich axial zwischen den Wulsten (7) erstreckt und
--- die keine Elemente für eine Verbindung des Innenvolumens des inneren Schlauchs (4) und der Umgebung bei Atmosphärendruck hat,
**dadurch gekennzeichnet, dass** die Vorrichtung (14)
- wenigstens ein erstes Einlassventil (16) zum Füllen des inneren Schlauchs (4) mit Druckfluid und
- ein zweites Einstellventil (17) zum Aufrechterhalten des in dem inneren Schlauch (4) vorhandenen Drucks innerhalb eines vorgegebenen Bereichs von Werten aufweist.

2. Reifen nach Anspruch 1, **dadurch gekennzeichnet, dass** die Vorrichtung (14) wenigstens ein drittes Auslassventil (18) zum schnellen Entleeren des inneren Schlauchs (4) aufweist.

3. Reifen nach Anspruch 1, **dadurch gekennzeichnet, dass** die Vorrichtung (14) einen starren Körper (15) mit einem Füllventil (16), einem Einstellventil (17) und einem Auslassventil (18) aufweist.

4. Reifen nach Anspruch 1, **dadurch gekennzeichnet, dass** das Einlassventil (16) ein Ventil in Rückschlagbauweise mit einem Aktivierungsmechanismus ist, der von dem Druckunterschied betätigt wird, der zwischen den Enden des Ventils (16) vorhanden ist.

5. Reifen nach Anspruch 4, **dadurch gekennzeichnet, dass** der Aktivierungsmechanismus ein Verschlusselement (26) aufweist, das aus einer Offenstellung in eine Schließstellung des Ventils (16) als Folge des Druckunterschieds verschiebbar ist, der zwischen der Innenseite und der Außenseite des inneren Schlauchs (4) vorhanden ist.

6. Reifen nach Anspruch 1, **dadurch gekennzeichnet, dass** das Einlassventil (16) ein Ventil ist, das so gebaut ist, dass es im Normalfall offen ist, und einen Aktivierungsmechanismus aufweist, der aus der Offenstellung in die Schließstellung des Ventils (16) als Folge eines Eingriffs mit einem Gegenelement verschiebbar ist.

7. Reifen nach Anspruch 1, **dadurch gekennzeichnet, dass** das Einstellventil (17) ein Ventil ist, das so gebaut ist, dass es normalerweise geschlossen ist, und einen Aktivierungsmechanismus aufweist, der aus der Schließstellung in die Offenstellung des Ventils (17) als Folge des Drucks verschiebbar ist, der von dem Druckfluid innerhalb des inneren Schlauchs (4) gegen ein elastisches Gegenelement ausgeübt wird, das einen Gegendruck mit einem vorgegebenen Wert ausübt.

8. Reifen nach Anspruch 2, **dadurch gekennzeichnet, dass** das Auslassventil (18) ein Ventil ist, das so gebaut ist, dass es normalerweise geschlossen ist, und einen Aktivierungsmechanismus aufweist, der aus der Schließstellung in die Offenstellung des Ventils (18) als Folge des Drucks verschiebbar ist, der durch eine Wirkung ausgeübt wird, die aus der Umgebung gegen ein elastisches Gegenelement ausgeübt wird, das einen Gegendruck ausübt, der einen Wert hat, der größer ist als der des Drucks des Fluids innerhalb des inneren Schlauchs (4).

9. Reifen nach Anspruch 1, **dadurch gekennzeichnet, dass** der innere Schlauch (4) wenigstens zwei Kammern (A, B) hat, die unabhängig voneinander sind und von denen jede mit der Vorrichtung (14) versehen ist.

10. Reifen für Fahrzeugräder
- wobei der Reifen einen toroidförmigen Hohlraum begrenzt, der zwischen einem oberen Abschnitt und einem Paar von axial zugewandten Seitenwänden (6) gebildet wird, die in Wulsten (7) für die Montage des Reifens (2) auf einer entsprechenden Montagefelge enden,
- wobei der toroidförmige Hohlraum von seiner Umgebung bei Atmosphärendruck auf die erwähnte Montage folgend trennbar ist,
- wobei der Reifen eine elastisch expandierbare Zwischenwand (125) hat, die mit den Seitenwänden (6) verbunden ist und sich axial zwischen diesen so erstreckt, dass ein geschlossener Raum begrenzt wird, der in dem Hohlraum zwischen der Zwischenwand (125) und dem oberen Abschnitt des Reifens (2) gebildet wird, und
- wobei die Zwischenwand (125) eine Füll- und Entleervorrichtung (14) aufweist, die keine Elemente zum Verbinden des geschlossenen Raums und der Umgebung bei Atmosphärendruck hat,
**dadurch gekennzeichnet, dass** die Vorrichtung (14) wenigstens ein erstes Einlassventil (16) zum Füllen der Zwischenwand mit Druckfluid und ein zweites Einstellventil (17) zum Aufrechterhalten des in der Zwischenwand (125) vorhandenen Drucks innerhalb eines vorgegebenen Bereichs von Werten aufweist.

11. Verfahren zum Füllen eines inneren Schlauchs (4), der in den toroidförmigen Hohlraum eingelegt ist, der von einem Reifen (2) für Fahrzeugräder gebildet wird, der bei auf entsprechenden Felge montiert ist, wobei der Hohlraum von der Umgebung bei Atmosphärendruck getrennt ist, der innere Schlauch (4) mit einer Füll- und Entleervorrichtung (14) versehen ist, die keinerlei durch die Felge hindurchgehende Elemente für eine Verbindung mit der Umgebung hat, wobei das Verfahren die Schritte aufweist:
a) Einführen von Druckluft in den toroidförmigen Hohlraum bis ein vorgegebener Druckwert erreicht wird, wodurch eine Volumenkontraktion des Schlauchs (4) und eine dadurch bedingte elastische Reaktion der Materialien herbeigeführt wird, die den Schlauch (4) bilden, der von der Volumenkontraktion verformt wird,
b) Abwarten, dass der Druck im Inneren des inneren Schlauchs (4) als Folge der elastischen Reaktion des Schlauchs (4) zu einem Gleichgewicht mit dem Druck der Luft außerhalb des Schlauchs (4) in dem zwischen dem Reifen (2) und der Felge gebildeten Raum zurückkehrt, und
c) Auslassen der in dem Hohlraum zwischen dem Reifen (2) und der Felge verbleibenden Druckluft.

12. Verfahren nach Anspruch 11, mit den zusätzlichen Schritten:
d) Abwarten der Abführung des überschüssigen Fluids aus dem inneren Schlauch (4), bis er den vorgegebenen Fülldruckwert erreicht und
e) Trennen des Hohlraums zwischen dem Reifen (2) und der Felge von der Umgebung bei Atmosphärendruck.

13. Verfahren nach Anspruch 11, bei welchem der Schritt des Einführens von Druckluft in den Hohlraum mit einem Ventil (16) in Rückschlagventilbauweise ausgeführt wird, das an der Füllvorrichtung (14) angeordnet ist, und den Schritt aufweist, das Schließen des Ventils (16) als Folge der Druckdifferenz zwischen der Innenseite und der Außenseite des inneren Schlauchs (4) herbeizuführen.

14. Verfahren nach Anspruch 11, bei welchem der Schritt des Einführens von Druckluft in den Hohlraum mit einem Ventil ausgeführt wird, das so gebaut ist, dass es normalerweise offen ist, und das an der Füllvorrichtung (14) angebracht ist, und den Schritt aufweist, das Schließen des Ventils mittels Eingriff zwischen der Vorrichtung (14) und der Wand der Felge herbeizuführen.

15. Verfahren nach Anspruch 12, bei welchem der Schritt des Auslassens von überschüssigem Fluid bis der vorgegebene Fülldruckwert erreicht ist, mit einem Einstellventil (17) ausgeführt wird, das so gebaut ist, dass es normalerweise geschlossen ist und das an der Füllvorrichtung (14) angebracht ist.

16. Verfahren zum Entleeren eines inneren Schlauchs (4), der mit Druckfluid gefüllt und in den toroidförmigen Hohlraum eingelegt ist, der von einem Reifen (2) für Fahrzeugräder gebildet wird, der auf der entsprechenden Felge montiert ist, wobei der innere Schlauch (4) mit einer Füll- und Entleervorrichtung (14) versehen ist, die keinerlei durch die Felge hindurchgehende Elemente für eine Verbindung mit der Umgebung außerhalb des Hohlraums hat, wobei der Füllschritt dadurch ausgeführt wird, dass Fluid aus dem Schlauch (4) mittels eines Auslassventils (18) in der normalerweise geschlossenen Bauweise, das an der Füllvorrichtung (14) angebracht ist, abgezogen wird, wobei ein Aktivierungsmechanismus aus der Schließstellung in die Offenstellung des Ventils (18) als Folge einer Wirkung verschoben wird, die aus der Umgebung außerhalb des Hohlraums entsteht.

## Revendications

1. Pneu pour roues de véhicule, délimitant une cavité toroïdale définie entre une partie de sommet et une paire de flancs se faisant face axialement (6) et se terminant en talons (7) pour l'assemblage du pneu (2) avec une jante correspondante, ladite cavité toroïdale pouvant être isolée du milieu environnant à la pression atmosphérique, suivant l'assemblage susmentionné, et comprenant une chambre à air (4) dans ladite cavité, dilatable de manière élastique pour l'introduction d'un fluide sous pression dans son volume intérieur, intégrée à la surface de ladite cavité et pourvue d'un dispositif de gonflage et de dégonflage (14) inséré dans la partie circonférentielle de la paroi de ladite chambre à air (4) s'étendant axialement entre lesdits talons (7), ledit dispositif (14) ne comportant pas d'éléments pour relier le volume intérieur de la chambre à air (4) audit milieu environnant à la pression atmosphérique, **caractérisé en ce que** ledit dispositif (14) comprend au moins une première valve d'entrée (16), pour gonfler ladite chambre à air (4) avec du fluide sous pression et une deuxième valve, d'ajustement (17), pour maintenir la pression régnant dans ladite chambre à air (4) à l'intérieur d'une plage de valeurs préalablement déterminée.

2. Pneu selon la revendication 1, **caractérisé en ce que** ledit dispositif (14) comprend au moins une troisième valve, de rejet (18), pour le dégonflage rapide de ladite chambre à air (4).

3. Pneu selon la revendication 1, **caractérisé en ce que** ledit dispositif (14) comprend un corps rigide (15) comportant une valve de gonflage (16), une valve d'ajustement (17) et une valve de rejet (18).

4. Pneu selon la revendication 1, **caractérisé en ce que** ladite valve d'entrée (16) est du type valve de retenue comprenant un mécanisme d'actionnement actionné par la différence de pression existant entre les extrémités de ladite valve (16).

5. Pneu selon la revendication 4, **caractérisé en ce que** ledit mécanisme d'actionnement comprend un élément d'obturation (26) qui peut se déplacer d'une position ouverte à une position fermée de ladite valve (16), suite à la différence de pression existant entre l'intérieur et l'extérieur de ladite chambre à air (4).

6. Pneu selon la revendication 1, **caractérisé en ce que** ladite valve d'entrée (16) est une valve du type normalement ouvert comprenant un mécanisme d'actionnement qui peut se déplacer de la position ouverte à la position fermée de ladite valve (16) suite à l'interaction avec un élément d'opposition.

7. Pneu selon la revendication 1, **caractérisé en ce que** ladite valve d'ajustement (17) est une valve du type normalement fermé comprenant un mécanisme d'actionnement qui peut se déplacer de la position fermée à la position ouverte de ladite valve (17) suite à la poussée exercée par le fluide sous pression à l'intérieur de ladite chambre à air (4) contre un élément d'opposition élastique qui exerce une poussée opposée ayant une valeur préalablement déterminée.

8. Pneu selon la revendication 2, **caractérisé en ce que** ladite valve de rejet (18) est une valve du type normalement fermé comprenant un mécanisme d'actionnement qui peut se déplacer de la position fermée à la position ouverte de ladite valve (18) suite à la poussée exercée par une action créée par ledit milieu environnant contre un élément d'opposition élastique qui exerce une poussée opposée ayant une valeur supérieure à celle de la pression du fluide à l'intérieur de ladite chambre à air (4).

9. Pneu selon la revendication 1, **caractérisé en ce que** ladite chambre à air (4) comprend au moins deux compartiments (A, B) indépendants l'un de l'autre et munis chacun dudit dispositif (14).

10. Pneu pour roues de véhicule, délimitant une cavité toroïdale définie entre une partie de sommet et une paire de flancs se faisant face axialement (6) et se terminant en talons (7) pour l'assemblage du pneu (2) avec une jante correspondante, ladite cavité toroïdale pouvant être isolée du milieu environnant à la pression atmosphérique, suivant l'assemblage susmentionné, ledit pneu comprenant une cloison circonférentielle dilatable de manière élastique (125) soudée auxdits flancs (6) et s'étendant axialement entre eux de façon à délimiter un espace fermé formé dans ladite cavité entre la cloison (125) et la partie de sommet dudit pneu (2), ladite cloison (125) comprenant un dispositif de gonflage et de dégonflage (14) ne comportant pas d'éléments pour relier ledit espace fermé audit milieu environnant à la pression atmosphérique, **caractérisé en ce que** ledit dispositif (14) comprend au moins une première valve d'entrée (16), pour gonfler ladite cloison (125) avec du fluide sous pression et une deuxième valve, d'ajustement (17), pour maintenir la pression régnant dans ladite cloison (125) à l'intérieur d'une plage de valeurs préalablement déterminée.

11. Procédé de gonflage d'une chambre à air (4) insérée dans la cavité toroïdale définie par un pneu (2) pour roues de véhicule, monté sur une jante correspondante, ladite cavité étant isolée du milieu environnant à la pression atmosphérique, ladite chambre à air (4) étant pourvue d'un dispositif de gonflage et de dégonflage (14) qui ne comporte aucun élément pour la connexion audit milieu environnant, traversant ladite jante, comprenant les étapes consistant à :
a) introduire de l'air sous pression dans ladite cavité toroïdale jusqu'à ce qu'une valeur de pression prédéfinie soit atteinte de telle manière à causer la contraction du volume de la chambre (4) et une réaction élastique résultante des matériaux qui forment ladite chambre (4), déformée par ladite contraction en volume ;
b) attendre que la pression régnant à l'intérieur de ladite chambre à air (4), suite à ladite réaction élastique de la chambre (4), revienne à l'équilibre avec la pression de l'air à l'extérieur de ladite chambre (4), dans l'espace défini entre le pneu (2) et la jante ;
c) rejeter l'air sous pression restant dans ladite cavité entre le pneu (2) et la jante.

12. Procédé selon la revendication 11, comprenant les étapes supplémentaires consistant à :
d) attendre que la chambre à air (4) ait rejeté le fluide en excès jusqu'à ce qu'il atteigne une valeur de pression de gonflage prédéfinie ;
e) isoler ladite cavité comprise entre le pneu (2) et la jante du milieu environnant à la pression atmosphérique.

13. Procédé selon la revendication 11, dans lequel ladite étape d'introduction d'air sous pression dans ladite cavité est exécutée avec une valve (16) du type valve de retenue montée sur ledit dispositif de gonflage (14) et comprend l'étape consistant à causer la fermeture de ladite vanne (16) en conséquence de la différence de pression entre l'intérieur et l'extérieur de la chambre à air (4).

14. Procédé selon la revendication 11, dans lequel ladite étape d'introduction d'air sous pression dans ladite cavité est exécutée avec une valve du type normalement ouvert montée sur ledit dispositif de gonflage (14) et comprend l'étape consistant à causer la fermeture de ladite vanne par le biais de l'interaction entre le dispositif (14) et la paroi de la jante.

15. Procédé selon la revendication 12, dans lequel ladite étape de rejet du fluide en excès jusqu'à ce que ladite valeur de pression de gonflage prédéfinie soit atteinte est exécutée avec une valve d'ajustement (17) du type normalement fermé montée sur ledit dispositif de gonflage (14).

16. Procédé de dégonflage d'une chambre à air (4) gonflée avec un fluide sous pression et insérée dans la cavité toroïdale définie par un pneu (2) pour roues de véhicule, monté sur une jante correspondante, ladite chambre à air (4) étant pourvue d'un dispositif de gonflage et de dégonflage (14) qui ne comporte aucun élément pour la connexion au milieu extérieur à ladite cavité, traversant ladite jante, dans lequel ladite étape de dégonflage est exécutée en extrayant ledit fluide de ladite chambre (4) au moyen d'une valve de rejet (18) du type normalement fermé, montée sur ledit dispositif de gonflage (14), déplaçant un mécanisme d'actionnement de la position fermée à la position ouverte de ladite valve (18) en conséquence d'une action créée par ledit milieu extérieur à ladite cavité.
